# EUROPEAN PATENT SPECIFICATION

(11) **EP 1 961 605 B1**
(45) Date of publication and mention of the grant of the patent: **20.07.2011**
(21) Application number: 08151883.9
(22) Date of filing: 25.02.2008
(51) Int. Cl.: B60K 31/00, B60W 10/06, B60W 10/10, B60W 10/04, B60W 30/14

(54) **Control device for vehicle**
Steuervorrichtung für ein Fahrzeug
Dispositif de commande pour véhicule

(30) Priority: 26.02.2007 JP 2007045453
(43) Date of publication of application: 27.08.2008
(73) Proprietor: Toyota Jidosha Kabushiki Kaisha, Toyota-shi, Aichi 471-8571 (JP)
(72) Inventor: Sakamoto, Osamu c/o TOYOTA JIDOSHA KABUSHIKI KAISHA, Toyota-shi Aichi 471-8571 (JP); Sawada, Hiroyuki c/o TOYOTA JIDOSHA KABUSHIKI KAISHA, Toyota-shi Aichi 471-8571 (JP); Ayabe, Atsushi c/o TOYOTA JIDOSHA KABUSHIKI KAISHA, Toyota-shi Aichi 471-8571 (JP); Nakane, Yoshihide c/o TOYOTA JIDOSHA KABUSHIKI KAISHA, Toyota-shi Aichi 471-8571 (JP)
(74) Representative: TBK

(56) References cited:
- EP-A- 1 057 684
- EP-A- 1 557 590
- EP-A- 1 925 487
- DE-C1- 19 924 946
- GB-A- 2 298 937

## Description

### BACKGROUND OF THE INVENTION

### Field of the Invention

The present invention relates to a control device according to the preamble of claim 1, and particularly to a technique directed to a vehicle on which an automatic transmission is mounted.

### Description of the Background Art

For the purpose of, for example, preventing traffic accidents resulting from overspeed, vehicles equipped with a speed limitation function called ASL (Adjustable Speed Limitation) have been put in practice. ASL is a system for limiting the vehicle speed by limiting the engine output according to a relation between a current vehicle speed and a vehicle speed limit arbitrarily set by a driver, so that the set vehicle speed limit is not exceeded even when the driver depresses the accelerator pedal to a great degree.

So far, large-sized vehicles such as motortrucks are equipped with this ASL in most cases. In consideration of fuel efficiency for example, most large-sized vehicles are equipped with a manual transmission with which a driver selects any gear position. Therefore, the conventional ASL is chiefly designed for use in combination with a manual transmission. Most ASL systems are thus configured to limit only the engine output regardless of the selected gear position at that time.

In contrast, application of the ASL to standard-sized vehicles such as passenger cars has also been started in recent years. Many standard-sized vehicles are equipped with an automatic transmission. Thus, it is necessary to control the gear changing operation of the automatic transmission and the limitation of the engine output so that these are in harmony with each other.

An example of the gear changing operation of the automatic transmission includes downshifting operation (to select a gear position with a higher reduction gear ratio) and upshifting operation (to select a gear position with a lower reduction gear ratio). Downshifting is performed for increasing the driving force of the vehicle when the driver depresses the accelerator pedal. In contrast, upshifting is performed for reducing fuel consumed by the engine (or for reducing the engine speed) when the driver eases the accelerator pedal.

JP-A-2004-138143 discloses a configuration of a steady state travel control device (auto-cruise system) that differs from the above-described ASL in terms of purpose and operation while that is similar to the ASL in that the driver's operation on the accelerator pedal is disabled and the control device controls the engine output. The steady state travel control device inhibits downshifting under the conditions that the accelerator pedal is depressed to a predetermined degree or more and the vehicle speed is exceeded by a predetermined allowance or more during the steady state travel control.

The ASL and the auto-cruise system, however, differ from each other in terms of purpose and operation thereof. Thus, control operation of the auto-cruise system disclosed in JP-A-2004-138143 could not be applied to the ASL.

For example, it is supposed that the ASL is being set effective and the driver depresses the accelerator pedal when the vehicle speed is approaching a vehicle speed limit. Then, the engine output increases while downshifting is performed. When the vehicle speed thereafter reaches the vehicle speed limit, the engine output is restricted and thereby upshifting is performed. Thus, downshifting and upshifting are successively performed in a short period of time, resulting in the problem that the driver is given a busy impression.

In contrast, while the ASL is being set effective, if downshifting based on the driver's operation on the accelerator is inhibited without exception, the gear changing operation is not performed as expected by the driver, resulting in the problem that the driver is given an odd impression.

The EP-A-1925487 which is a prior art according to Art. 54(3) EPC and the GB-A-2298937 disclose control devices having the features according to the preamble of claim 1.

### SUMMARY OF THE INVENTION

The present invention has been made for solving these problems, and an object of the invention is to provide a control device capable of keeping the vehicle speed not higher than a vehicle speed limit that is set by the driver without giving an odd impression to the driver.

This object is solved by a control device having the features of claim 1. Advantageous further formations are subject of the dependent claims.

The control device is mounted on a vehicle for keeping a vehicle speed not higher than a vehicle speed limit that is set by a driver. The vehicle includes: a driving force source for driving a wheel; and a transmission disposed in a motive power transmission path from the driving force source to the wheel for transmitting a driving force through one gear position selected from a plurality of gear positions. The driving force source is configured to change a magnitude of the driving force provided to the wheel in response to an output request from the control device. The control device according to the aspect includes: vehicle speed detecting means for detecting the vehicle speed; operation amount obtaining means for obtaining an amount of operation of an accelerator by the driver; output request generating means for limiting a driver request value determined according to the amount of operation of the accelerator such that the driver request value does not exceed a driver request value limit determined according to a deviation between the vehicle speed limit and the vehicle speed, for generating the output request based on the limited driver request value; shifting means and performing downshifting and/or inhibition of upshifting for a gear position being selected of the transmission based on a change of the amount of operation of the accelerator with respect to time; and disabling means for disabling operation by the shifting means when the vehicle is traveling in a nearly limited state.

In the case where the vehicle is traveling in "nearly limited state" which means that downshifting and upshifting may be successively performed, the shifting operation (downshifting or inhibition of upshifting) by the shifting means is disabled. In other cases, the shifting means performs a normal shifting operation.

Accordingly, downshifting and upshifting successively performed in a short period of time can be avoided to prevent a busy impression from being given to the driver. Further, in a traveling state in which downshifting can be performed, the shifting operation is permitted to implement a vehicle behavior similar to that in the case where the ASL is not set effective. In this way, the ASL operation can be performed without giving an odd impression to the driver.

The shifting unit performs the downshifting when an amount of increase with respect to time of the amount of operation of the accelerator is not less than a predetermined positive value, and performs the inhibition of upshifting when an amount of decrease with respect to time of the amount of operation of the accelerator is not more than a predetermined negative value.

Preferably, the disabling unit determines whether or not the vehicle is in the nearly limited state, based on a relative relation between the vehicle speed and the vehicle speed limit.

More preferably, the disabling unit determines that the vehicle is in the nearly limited state, when an amount of margin of the vehicle speed with respect to the vehicle speed limit is not more than a predetermined value.

Still more preferably the disabling unit calculates a predicted vehicle speed based on a change with respect to time of the vehicle speed, and determines that the vehicle is in the nearly limited state when an amount of margin of the predicted vehicle speed with respect to the vehicle speed limit is not more than a predetermined value.

Preferably, the disabling unit determines whether or not the vehicle is in the nearly limited state, based on a relative relation between the driver request value and the driver request value limit.

More preferably, the disabling unit determines that the vehicle is in the nearly limited state when an amount of margin of the driver request value with respect to the driver request value limit is not more than a predetermined value.

Still more preferably the disabling unit calculates a predicted vehicle speed based on a change with respect to time of the vehicle speed, determines a predicted value of the driver request value limit according to the predicted vehicle speed, and determines that the vehicle is in the nearly limited state when an amount of margin of the driver request value with respect to the predicted value of the driver request value limit is not more than a predetermined value.

In accordance with the present invention, the control device can be implemented that can keep the vehicle speed not higher than a vehicle speed limit that is set by a driver without giving an odd impression to the driver.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic configuration diagram showing a vehicle equipped with a control device according to an embodiment of the present invention.
Fig. 2 is a block diagram schematically showing a control structure relevant to generation of an engine output request by the control device according to the embodiment of the present invention.
Fig. 3 shows a time waveform for illustrating a busy impression and an odd impression caused while the ASL is being set effective.
Fig. 4 is a schematic diagram showing how a determination about a nearly limited state is made based on a relative relation between a vehicle speed and a vehicle speed limit.
Fig. 5 is a schematic diagram showing how a determination about a nearly limited state is made based on a relative relation between an accelerator-pedal-based throttle opening degree and a throttle opening degree limit.
Fig. 6 is a functional block diagram showing a control structure for the control device according to the embodiment of the present invention.
Fig. 7 is a functional block diagram showing a control structure for a shift disablement unit according to the embodiment of the present invention.
Fig. 8 is a flowchart showing a process procedure relevant to a gear changing operation while the ASL is being set effective according to the embodiment of the present invention.
Fig. 9 is a functional block diagram showing a control structure of a shift disablement unit according to a modification of the embodiment of the present invention.
Fig. 10 is a flowchart showing a process procedure relevant to a gear changing operation while the ASL is being set effective according to the modification of the embodiment of the present invention.

### DESCRIPTION OF THE PREFERRED EMBODIMENTS

An embodiment of the present invention will be described in detail with reference to the drawings. In the drawings, like or corresponding components are denoted by like reference characters and a description thereof will not be repeated.

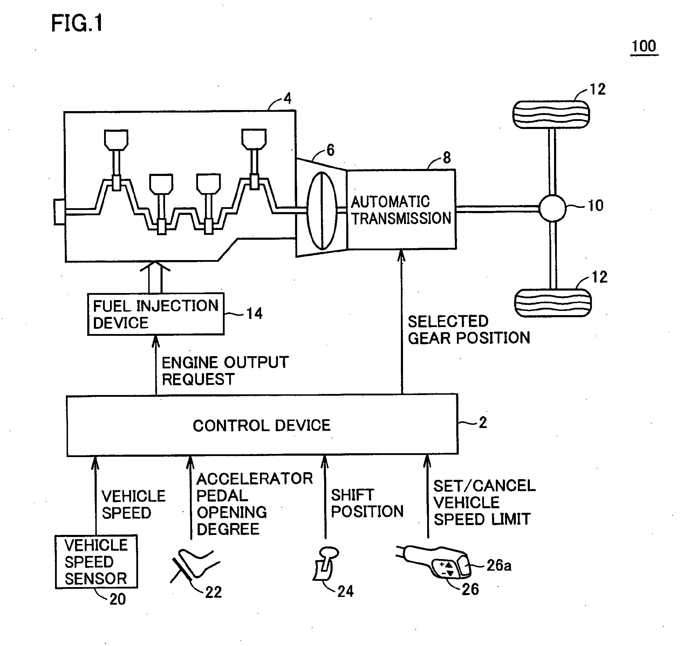

Fig. 1 is a schematic configuration diagram showing a vehicle 100 equipped with a control device according to the embodiment of the present invention.

Referring to Fig. 1, vehicle 100 is an automobile having the ASL (Adjustable Speed Limitation) function, and the ASL function is implemented by a program executed for example by control device 2. Once a driver sets the ASL effective, the vehicle speed is kept at a vehicle speed limit or lower that is set in advance. The driver may be allowed to arbitrarily change the vehicle speed limit even after the ASL is set effective.

In the following description, the state where the ASL is operating is also described as "ASL is being set effective" and the state where the ASL is canceled and is not operating is also described as "ASL is not being set effective."

Typically, vehicle 100 includes control device 2, an engine 4, a torque converter 6, an automatic transmission 8, a differential gear 10, wheels 12, a fuel injection device 14, a vehicle speed sensor 20, an accelerator pedal 22, a shift lever 24, and an ASL controller 26. In vehicle 100, a driving force generated by engine 4 which is a typical example of the driving force source is transmitted to wheels 12 through a motive power transmission path including torque converter 6, automatic transmission 8 and differential gear 10. Wheels 12 are driven to rotate by the driving force from engine 4 and cause vehicle 100 to travel.

Control device 2 is typically configured with an ECU (Electrical Control Unit) whose main components are a CPU (Central Processing Unit), a memory unit which includes a RAM (Random Access Memory) and a ROM (Read Only Memory) for example, and an input/output interface unit. Following a control map for example stored in the memory unit, control device 2 controls the output of engine 4 and the gear position to be selected of automatic transmission 8 for allowing vehicle 100 to travel in an appropriate state, based on the vehicle speed from vehicle speed sensor 20, the accelerator pedal opening degree from accelerator pedal 22 and the shift position from shift lever 24 for example.

Engine 4 typically generates a driving force by combustion of a fuel such as gasoline or light oil, and has its output shaft (or crankshaft) coupled to torque converter 6. In the following description, a vehicle equipped with a gasoline engine operated with gasoline fuel will be illustrated. The present invention, however, is not limited by the type of fuel and the engine structure.

Fuel injection device 14 is a device for injecting a vaporized fuel into a cylinder for example of engine 4, and is configured such that an injection quantity per unit time can be controlled according to an engine output request from control device 2. Accordingly, engine 4 changes the magnitude of the driving force to be supplied to wheels 12, in response to the engine output request (typically the throttle opening degree) from control device 2. In the case of a diesel engine without using a throttle valve for engine output control, a control signal for indicating a fuel injection quantity in place of the throttle opening degree is used.

Torque converter 6 is disposed between engine 4 and automatic transmission 8 and changes, in response to a gear changing operation of automatic transmission 8 and a driving operation by the driver, the rotational speed and torque of the rotational driving force generated by engine 4 to desired values, which are thereafter transmitted to automatic transmission 8.

Automatic transmission 8 is disposed between torque converter 6 and differential gear 10 and transmits the driving force through one train of gears according to a select gear command from control device 2, among a plurality of trains of gears. In other words, automatic transmission 8 converts a rotational speed of the output shaft of torque converter 6 into a rotational speed corresponding to the reduction gear ratio of the selected gear position to drive differential gear 10. Therefore, the vehicle speed of vehicle 100 relative to the rotational speed of engine 4 can be changed by successively making lower or higher the reduction gear ratio in automatic transmission 8.

Differential gear 10 transmits the vehicle driving force which is output from automatic transmission 8 to wheels 12. In addition, differential gear 10 absorbs a rotational speed difference of wheels 12 which is caused while vehicle 100 is traveling.

Vehicle speed sensor 20 is disposed in the vicinity of the rotational shaft for example of driven wheels (not shown) and detects the vehicle speed of vehicle 100 and sends a signal indicating the detected speed to control device 2.

Accelerator pedal 22 is disposed under the driver seat and sends the accelerator pedal opening degree, which corresponds to the degree to which the driver depresses the accelerator pedal, to control device 2. For example, accelerator pedal 22 contains a Hall sensor detecting the degree of depression by the driver and transmits a signal detected by the sensor to control device 2.

Shift lever 24 is disposed on the side of the driver seat or at an instrument panel in front of the driver seat and is configured such that "P" (parking) range, "R" (reverse) range, "N" (neutral) range, "D" (drive) range, for example can be selected. Shift lever 24 sends a shift position selected by the driver to control device 2.

ASL controller 26 is disposed around the handle ring for example to allow the ASL to be set effective and to be cancelled and allow a vehicle speed limit to be set by a driver's operation. Specifically, "ASL set" and "ASL cancel" are alternately issued in response to pressing of a set/cancel button 26 a provided on one end surface of ASL controller 26. In addition, ASL controller 26 is disposed to be tiltable in the upward and downward directions as seen on the drawing and issues a command for "increasing (+)" or "decreasing (-)" the vehicle speed limit in response to a tilting operation by the driver. Then, a command signal (set/cancel and changing the vehicle speed limit value) according to such a driver's operation is transmitted to control device 2.

Here, the relation between components shown in Fig. 1 and components of the present invention will be described. Engine 4 corresponds to "driving force source," automatic transmission 8 corresponds to "transmission," vehicle speed sensor 20 corresponds to "vehicle speed detecting means" and accelerator pedal 22 corresponds to "operation amount obtaining means".

While the ASL is being set effective, control device 2 in the present embodiment restricts the accelerator-pedal-based throttle opening degree which is determined according to the accelerator pedal opening degree such that a limit value determined according to a deviation between the vehicle speed and the vehicle speed limit is not exceeded, and then outputs the restricted accelerator-pedal-based throttle opening degree as an engine output request to fuel injection device 14.

Control device 2 also determines a gear position to be selected of automatic transmission 8 according to a shift map defined by the vehicle speed and the throttle opening degree, and downshifts (selects a gear position with a higher reduction gear ratio) and inhibits upshifting (inhibits selection of a gear position with a lower reduction gear ratio) depending on the driver's operation on the accelerator.

More specifically, control device 2 continuously monitors a change of the accelerator pedal opening degree with respect to time. When accelerator pedal 22 is depressed to a great degree, control device 2 determines that an acceleration request is given from the driver and downshifts the currently selected gear position of automatic transmission 8. This downshifting causes the driving force from wheels 12 to increase.

In contrast, when accelerator pedal 22 is eased to a great degree, upshifting of the currently selected gear position of automatic transmission 8 is inhibited, thereby keeping the gear position currently selected. If the upshifting is not inhibited, accelerator pedal 22 which is eased to a great degree causes the throttle opening degree to be reduced and the vehicle is upshifted according to the shift map. If the driver again depresses accelerator pedal 22 immediately thereafter, the throttle opening degree is increased and undesirably downshifting is performed according to the shift map. In other words, if the upshifting is not inhibited, the upshifting and downshifting are successively done, which gives a busy impression to the driver. As seen from the above, the upshifting is inhibited for suppressing the busy impression caused in the case where accelerator pedal 22 is greatly eased.

In the following, the downshifting and the inhibition of upshifting performed based on a change of the accelerator pedal opening degree with respect to time are also collectively called "shifting operation."

In particular, control device 2 according to the present embodiment disables the shifting operation only in the case where vehicle 100 travels in a nearly limited state while the ASL is being set effective. In the present specification, "nearly limited state" is intended to mean the state where downshifting and upshifting may be successively performed, and specifically means the case where the vehicle speed is close to a vehicle speed limit and/or the throttle opening degree is close to a limit value. Thus, both of a busy impression due to the successively performed downshifting and upshifting and an odd impression due to the fact that the shifting operation is not performed at all while the ASL is being set effective are prevented from being caused.

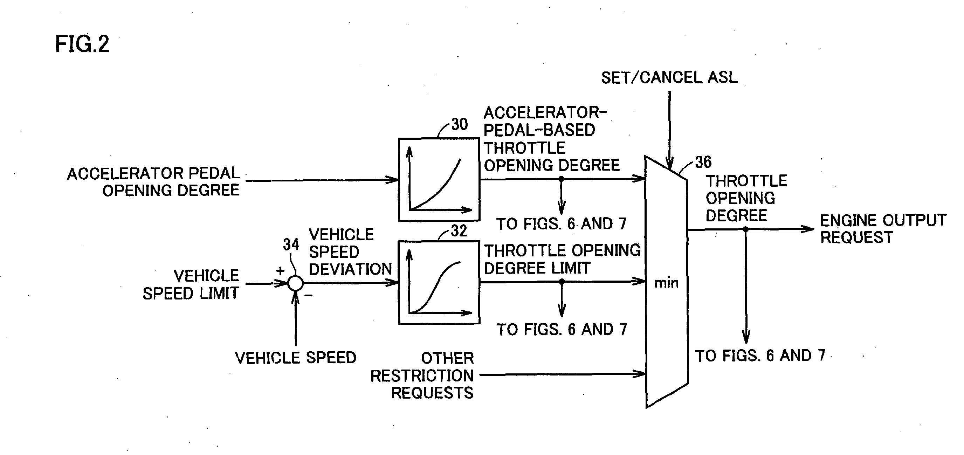

Fig. 2 is now used to describe a control structure relevant to generation of an engine output request by control device 2.

Fig. 2 is a block diagram schematically showing the control structure relevant to generation of an engine output request by control device 2 according to the embodiment of the present invention.

Referring to Fig. 2, the control structure of control device 2 includes a throttle opening degree characteristic storage unit 30, a limitation characteristic storage unit 32, a subtraction unit 34, and a minimum value selection unit (min) 36, and these units cooperate with each other to generate an engine output request according to setting/canceling of the ASL.

Throttle opening degree characteristic storage unit 30 stores the relation between the accelerator pedal opening degree corresponding to the degree to which the accelerator is operated by the driver and the accelerator-pedal-based throttle opening degree corresponding to a driver request value, in the form of a map or the like. According to the accelerator pedal opening degree which is output in response to depressing of accelerator pedal 22 by the driver, throttle opening degree characteristic storage unit 30 outputs a corresponding accelerator-pedal-based throttle opening degree.

Limitation characteristic storage unit 32 stores the relation between a vehicle speed deviation and a throttle opening degree limit in the form of a map or the like. The vehicle speed deviation is a difference between a vehicle speed limit and a vehicle speed and the throttle opening degree limit corresponds to a driver request limitation value. Limitation characteristic storage unit 32 outputs, according to the vehicle speed deviation calculated by subtraction unit 34, a corresponding throttle opening degree limit. The throttle opening degree limit is a maximum value of the throttle opening degree that allows the vehicle speed at each time to be kept at a vehicle speed limit or lower, and decreases as the vehicle speed deviation becomes smaller.

While the ASL is being set effective, minimum value selection unit 36 selects a smaller one of the accelerator-pedal-based throttle opening degree which is output from throttle opening degree characteristic storage unit 30 and the throttle opening degree limit which is output from limitation characteristic storage unit 32, and the selected one is output as an engine output request (typically throttle opening degree) to fuel injection device 14 (Fig. 1). In other words, while the ASL is being set effective, the accelerator-pedal-based throttle opening degree is restricted to be smaller than the throttle opening degree limit, and is output as an engine output request. Here, while the ASL is not being set effective, minimum value selection unit 36 outputs the accelerator-pedal-based throttle opening degree as it is as an engine output request, without restricting the accelerator-pedal-based throttle opening degree.

Further, minimum value selection unit 36 may be provided with other restriction requests. An example of the other restriction requests is restriction for keeping the rotational speed range of engine 4 or torque converter 6 within an allowable range.

Here, the relation between components shown in Fig. 2 and components of the present invention will be described. Throttle opening degree characteristic storage unit 30, limitation characteristic storage unit 32 and subtraction unit 34 correspond to "output request generating means."

A description will be given of a busy impression and an odd impression caused by the restriction of the engine output request by the control structure shown in Fig. 2 while the ASL is being set effective.

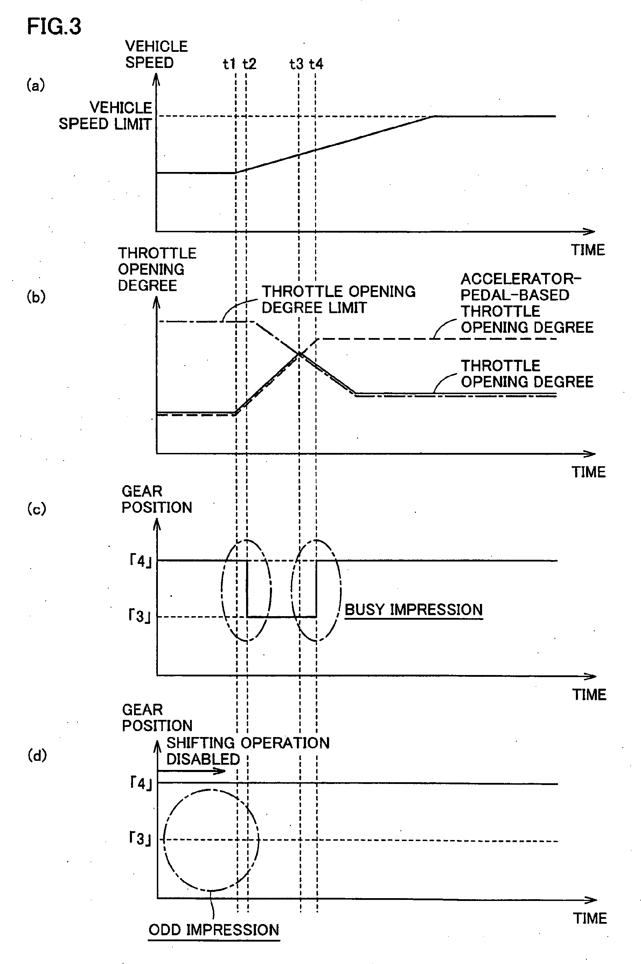

Fig. 3 shows a time waveform for illustrating the busy impression and the odd impression caused while the ASL is being set effective.

In Fig. 3, (a) shows an example of a change of the vehicle speed with respect to time, (b) shows a change of the throttle opening degree with respect to time that corresponds to (a) of Fig. 3, (c) shows a change of the gear position with respect to time in the case where the shifting operation is performed regardless of the operation of the ASL, and (d) shows a change of the gear position with respect to time in the case where the shifting operation is disabled without exception while the ASL is being set effective.

A description will be given of the case as an exemplary case where the driver depresses accelerator pedal 22 in the state in which the vehicle speed of vehicle 100 does not reach a vehicle speed limit, as shown by (a) of Fig. 3. Here, the selected gear position of automatic transmission 8 before accelerator pedal 22 is depressed is "4."

As shown by (b) of Fig. 3, the driver starts depressing accelerator pedal 22 at time t1. Then, the accelerator-pedal-based throttle opening degree starts to increase. At this time, the difference between the vehicle speed and the vehicle speed limit is relatively large. Therefore, the throttle opening degree limit is larger than the accelerator-pedal-based throttle opening degree and the value of the accelerator-pedal-based throttle opening degree is directly output as the throttle opening degree.

The shifting operation is performed based on the change of the throttle opening degree with time. Thus, if the shifting operation is not disabled, downshifting is performed at the time when an amount of increase with time of the throttle opening degree is equal to or larger than a predetermined value as shown by (c) of Fig. 3 (time t2). The downshifting changes the gear position from "4" to "3" with a higher reduction gear ratio and the driving force (torque) applied to wheels 12 increases. The increase of the driving force causes vehicle 100 to accelerate and the vehicle speed thereof approaches the vehicle speed limit. Since the vehicle speed approaches the vehicle speed limit, namely an amount of the margin of the vehicle speed with respect to the vehicle speed limit decreases, the throttle opening degree limit is reduced. Supposing that the accelerator-pedal-based throttle opening degree and the throttle opening degree limit are equal to each other at time t3, the throttle opening degree limit keeps decreasing thereafter. Therefore, after time t3, the throttle opening degree limit is output as the throttle opening degree.

Thus, the value which is output as the throttle opening degree changes from the accelerator-pedal-based throttle opening degree to the throttle opening degree limit. The throttle opening degree continuously increasing from time t1 to time t3 then starts to decrease at time t3. As the throttle opening degree decreases, upshifting is performed following the shift map (time t4) and the selected gear position changes from "3" again to "4."

Thus, the ASL operation limits the throttle opening degree to cause downshifting and upshifting to be performed successively as described above, which gives the busy impression to the driver.

In contrast, if the shifting operation is disabled without exception while the ASL is being set effective as shown by (d) of Fig. 3, the gear position is selected according to the shift map without exception. Therefore, the gear changing operation as expected by the driver is not performed, which gives an odd impression to the driver.

If the inhibition of upshifting is disabled without exception, downshifting and upshifting could be successively done following the shift map depending on the driver's operation on the accelerator, which could also give the busy impression to the driver. Further, it is possible that a gear position which is lower more than necessary (gear position with a higher reduction gear ratio) could be selected to deteriorate the fuel consumption efficiency or deteriorate drivability.

The reason why the downshifting and upshifting are successively performed as shown by (c) of Fig. 3 is that the relation in magnitude between the accelerator-pedal-based throttle opening degree and the throttle opening degree limit is reversed, namely that the accelerator-pedal-based throttle opening degree is restricted by the throttle opening degree limit. Accordingly, control device 2 according to the present embodiment disables the shifting operation only in "nearly limited state" where downshifting and upshifting may be performed successively while the ASL is being set effective.

In the present embodiment, typically it is determined whether or not the vehicle is in the nearly limited state, based on the relative relation between the vehicle speed and the vehicle speed limit and the relative relation between the accelerator-pedal-based throttle opening degree and the throttle opening degree limit.

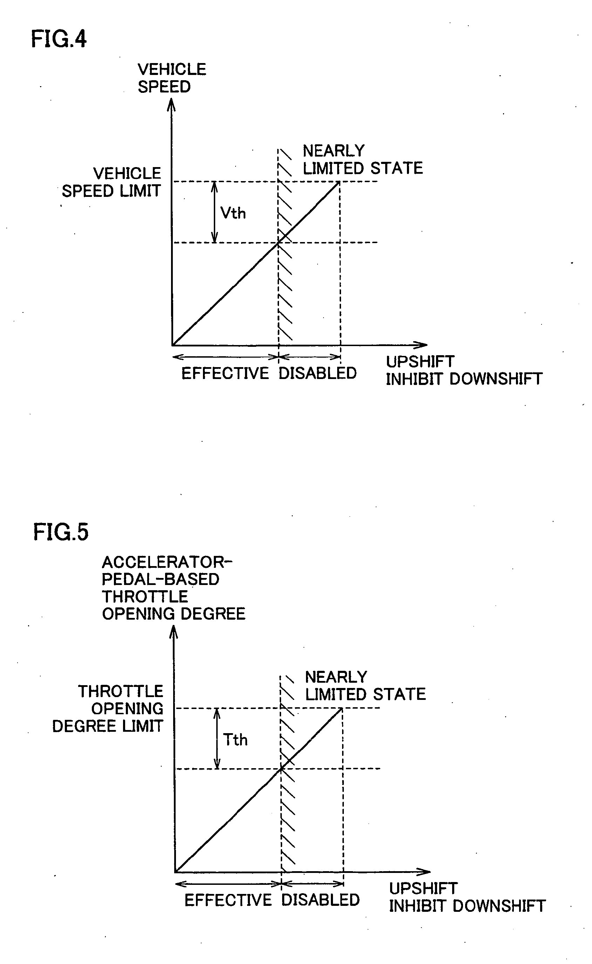

Fig. 4 is a schematic diagram showing how a determination about the nearly limited state is made based on the relative relation between the vehicle speed and the vehicle speed limit.

Referring to Fig. 4, typically it is determined whether or not the vehicle is in a nearly limited state based on a deviation of the vehicle speed relative to the vehicle speed limit (the deviation is hereinafter also referred to as "vehicle speed margin"). Specifically, if the vehicle speed margin is equal to or smaller than a threshold Vth, it is determined that the vehicle is in the nearly limited state. Namely, it is determined that the vehicle is in the nearly limited state when the relation "vehicle speed limit - vehicle speed ≤ threshold value Vth" is satisfied.

Fig. 5 is a schematic diagram showing how a determination about the nearly limited state is made based on the relative relation between the accelerator-pedal-based throttle opening degree and the throttle opening degree limit.

Referring to Fig. 5, typically it is determined whether or not the vehicle is in the nearly limited state, based on the magnitude of a deviation of the accelerator-pedal-based throttle opening degree relative to the throttle opening degree limit (the deviation is hereinafter also referred to as "opening degree margin"). Specifically, if the opening degree margin is equal to or smaller than a threshold value Tth, it is determined that the vehicle is in the nearly limited state. Namely, it is determined that the vehicle is in the nearly limited state when the relation "throttle opening degree limit - accelerator-pedal-based throttle opening degree ≤ threshold value Tth" is satisfied.

In the present embodiment, the determination logics shown in Figs. 4 and 5 are used and, if any of the determination logics is used to determine that the vehicle is in the nearly limited state, the downshifting operation and the inhibition of upshifting operation as described above are disabled.

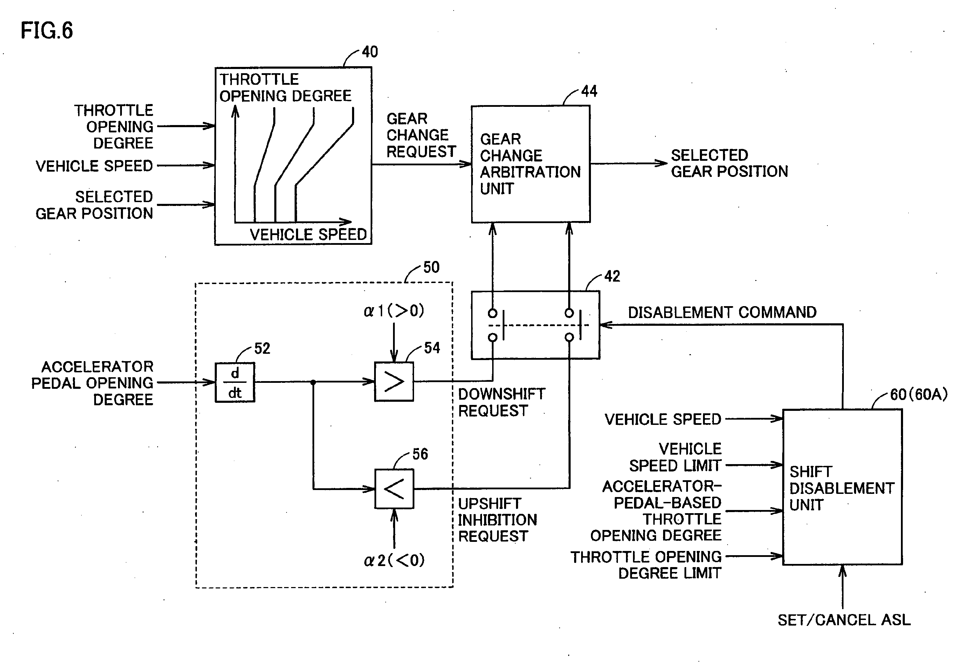

Fig. 6 is a functional block diagram showing a control structure of control device 2 according to the embodiment of the present invention.

Referring to Fig. 6, the control structure of control device 2 includes a gear change request determination unit 40, a gear change arbitration unit 44, a shift request output unit 50, a request block unit 42, and a shift disablement unit 60.

Gear change request determination unit 40 is a part for determining a gear position to be selected of automatic transmission 8 according to the traveling state, and determines, for each control cycle, a gear change request with reference to shift map characteristics stored in advance. The shift map characteristics define a gear position to be selected in association with a vehicle speed and a throttle opening degree. Based on the throttle opening degree from accelerator pedal 22, the vehicle speed from vehicle speed sensor 20 and the currently selected gear position for example, an appropriate gear position is selected according to the traveling state and the selection result is output as the gear change request.

Shift request output unit 50 is a part for outputting a downshift request and an upshift inhibition request according to the driver's operation on the accelerator and, when a predetermined condition is satisfied regarding a change of the accelerator pedal opening degree with respect to time, outputs a shift request.

Thus, the gear change request according to the traveling state that is output from gear change request determination unit 40 and the shift request according to the driver's request that is output from shift request output unit 50 are arbitrated by gear change arbitration unit 44, and finally a select gear command is output.

Shift request output unit 50 includes a change-with-time calculation unit (d/dt) 52 and comparison units 54, 56 and, when an increase with respect to time of the accelerator pedal opening degree becomes equal to or larger than a positive threshold value α1 (> 0) according to the driver's operation on the accelerator, outputs a downshift request. When a decrease with respect to time of the accelerator pedal opening degree becomes equal to or smaller than a negative threshold value α2 (< 0), the shift request output unit 50 outputs an upshift inhibition request.

Change-with-time calculation unit 52 typically includes a derivative unit or a difference unit performing an operation process in predetermined cycles to calculate an amount of change per unit time of the accelerator pedal opening degree. The amount of change per unit time of the accelerator pedal opening degree calculated by change-with-time calculation unit 52 is compared by comparison unit 54 with threshold value α1, and if it is equal to or larger than threshold value α1, a downshift request is given. Further, comparison unit 56 compares the amount of change per unit time of the accelerator pedal opening degree with threshold value α2, and if it is equal to or smaller than threshold value α2, an upshift inhibition request is given. Here, threshold values α1, α2 may be changed according to the traveling state of the vehicle such as the vehicle speed or the currently selected gear position.

Here, request block unit 42 is provided between shift request output unit 50 and gear change arbitration unit 44 for blocking transmission of the downshift request and the upshift inhibition request in response to a disablement command from shift disablement unit 60. Here, shift disablement unit 60 determines, according to the determination logics shown in Figs. 4 and 5 described above, whether or not vehicle 100 is traveling in the nearly limited state, and outputs the disablement command when the vehicle is in the nearly limited state. Thus, the shifting operation is disabled when vehicle 100 is traveling in the nearly limited state.

Here, the relation between components shown in Fig. 6 and components of the present invention will be described. Shift request output unit 50 corresponds to "shifting means" and shift disablement unit 60 and request block unit 42 correspond to "disabling means."

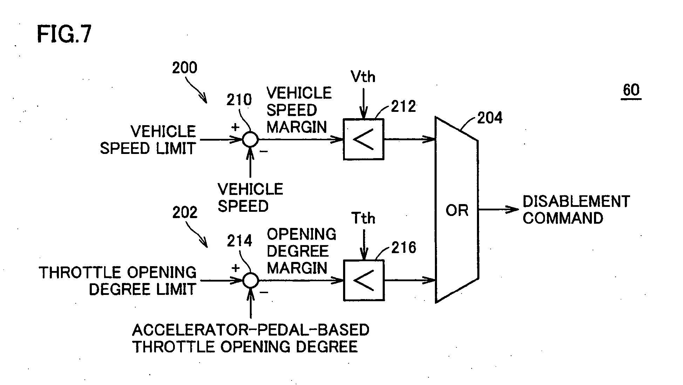

Fig. 7 will be used to describe a control structure for implementing the determination logic of shift disablement unit 60.

Fig. 7 is a functional block diagram showing a control structure of shift disablement unit 60 according to the embodiment of the present invention.

Referring to Fig. 7, shift disablement unit 60 includes a logical sum unit (OR) 204, a first determination unit 200 including a subtraction unit 210 and a comparison unit 212, and a second determination unit 202 including a subtraction unit 214 and a comparison unit 216.

First determination unit 200 is a part for determining whether or not the vehicle is in the nearly limited state, based on the relative relation between the vehicle speed and the vehicle speed limit, and a vehicle speed margin which is a deviation of the vehicle speed with respect to the vehicle speed limit as calculated by subtraction unit 210 is compared by comparison unit 212 with threshold value Vth. When the vehicle speed margin is equal to or smaller than threshold value Vth, the output to logical sum unit 204 is activated.

In contrast, second determination 202 is a unit for determining whether or not the vehicle is in the nearly limited state, based on the relative relation between the accelerator-pedal-based throttle opening degree and the throttle opening degree limit, and an opening degree margin which is a deviation of the accelerator-pedal-based throttle opening degree with respect to the throttle opening degree limit as calculated by subtraction unit 214 is compared by comparison unit 216 with threshold value Tth. When the opening degree margin is equal to or smaller than threshold value Tth, the output to logical sum unit 204 is activated.

Logical sum unit 204 is a part for providing respective outputs of first determination unit 200 and second determination unit 202 altogether as a disablement command, and activates the disablement command when any of first determination unit 200 and second determination unit 202 determines that the vehicle is in the nearly limited state.

The control operation with the above-described control structure is summarized in the form of the following process flow.

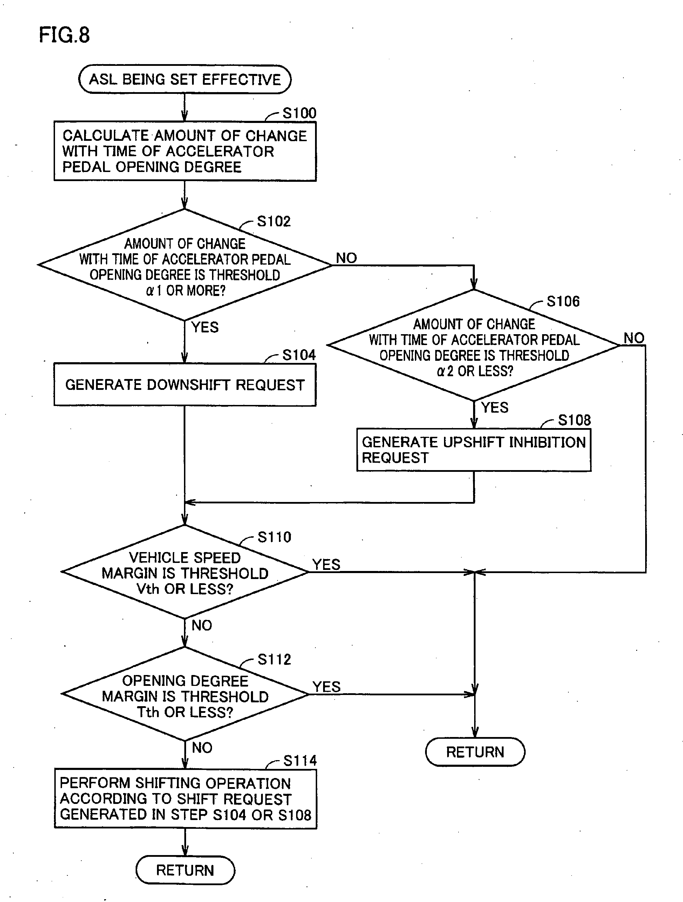

Fig. 8 is a flowchart showing a process procedure for a gear changing operation while the ASL is being set effective according to the embodiment of the present invention. Here, the process procedure shown in Fig. 8 is typically performed as a subroutine program of control device 2.

Referring to Fig. 8, control device 2 obtains the accelerator pedal opening degree from accelerator pedal 22 and calculates an amount of change with respect to time of the accelerator pedal opening degree (step S100). Control device 2 determines whether or not the amount of change with time of the accelerator pedal opening degree as calculated is equal to or larger than threshold value α1 (step S102). When the amount of change with time of the accelerator pedal opening degree is equal to or larger than threshold value α1 (YES in step S102), control device 2 generates a downshift request (step S104).

In contrast, when the amount of change with time of the accelerator pedal opening degree is not equal to or larger than threshold value α1 (NO in step S102), control device 2 further determines whether or not the amount of change with time of the accelerator pedal opening degree is equal to or smaller than threshold value α2 (step S 106). When the amount of change with time of the accelerator pedal opening degree is equal to or smaller than threshold value α2 (Yes in step S106), control device 2 generates an upshift inhibition request (step S 108). When the amount of change with time of the accelerator pedal opening degree is not equal to or smaller than threshold value α2 (NO in step S106), control device 2 does not perform the subsequent steps and returns to the initial step.

When the downshift request is generated (step S104) or the upshift inhibition request is generated (step S108), control device 2 determines whether or not the vehicle speed margin which is a deviation of the vehicle speed of vehicle 100 from a vehicle speed limit which is set by the driver is equal to or smaller than threshold value Vth (step S110). Namely, whether or not the vehicle is in the nearly limited state is determined based on the relative relation between the vehicle speed and the vehicle speed limit. When the vehicle speed margin is equal to or smaller than threshold value Vth (Yes in step S 110), control device 2 determines that vehicle 100 is traveling in the nearly limited state, and does not perform the subsequent steps and disables the shifting operation according to the shift request generated in the above-described step S104 or step S 108. Control device 2 then returns to the initial step.

In contrast, when the vehicle speed margin is not equal to or smaller than threshold value Vth (No in step S110), control device 2 determines whether or not the opening degree margin which is a deviation of the accelerator-pedal-based throttle opening degree with respect to the throttle opening degree limit is equal to or smaller than threshold value Tth (step S 112). When the opening degree margin is equal to or smaller than threshold value Tth (YES in step S112), control device 2 determines that vehicle 100 is traveling in the nearly limited state. Then, control device 2 does not perform the subsequent steps and disables the shifting operation according to the shift request generated in the above-described step S 104 or step S108. Control device 2 then returns to the initial step.

In contrast, when the vehicle speed margin is not equal to or smaller than threshold value Vth (NO in step S 112), control device 2 determines that the traveling state of vehicle 100 is not the nearly limited state, and performs the shifting operation according to the shift request generated in step S 104 or S 108 as described above (step S 114). After performing the shifting operation, control device 2 returns to the initial step.

### Modification

The embodiment above is described in connection with the structure for determining whether or not the vehicle is in the nearly limited state, based on the current value of the vehicle speed and/or throttle opening degree. Alternatively, based on a predicted value which is estimated from a behavior of the vehicle speed and/or throttle opening degree, it may be determined whether or not the vehicle is in the nearly limited state.

Typically, based on the amount of change with time of the vehicle speed of vehicle 100, a predicted vehicle speed which is a predicted value of the vehicle speed after a predetermined time from the current time is calculated. Then, based on a vehicle speed margin (predicted value) calculated using the predicted vehicle speed, it is determined whether or not the vehicle is in the nearly limited state.

A throttle opening degree corresponding to the calculated predicted vehicle speed is determined as a predicted throttle opening degree limit. Based on an opening degree margin (predicted value) calculated using the determined predicted throttle opening degree limit, it is determined whether or not the vehicle is in the nearly limited state.

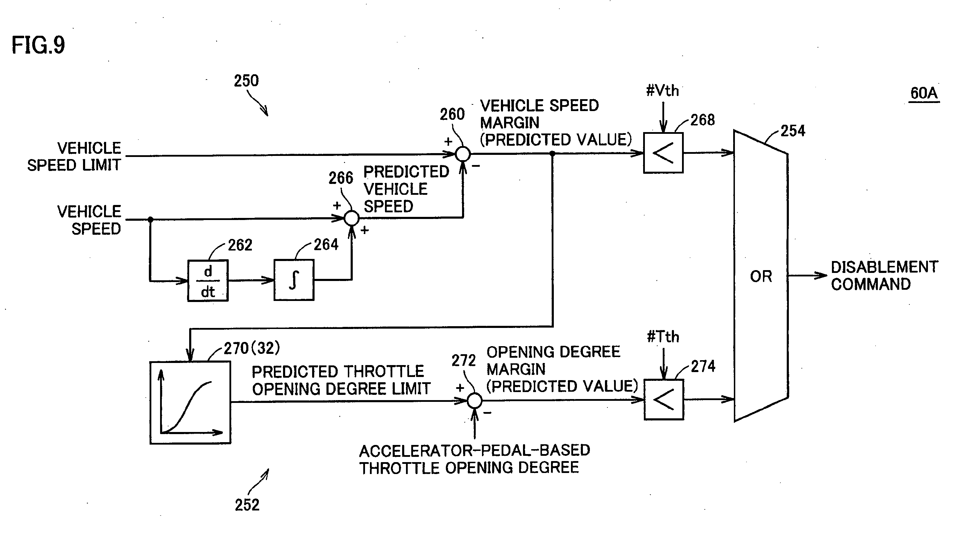

Fig. 9 is a functional block diagram showing a control structure of a shift disablement unit 60A according to the modification of the embodiment of the present invention.

Referring to Fig. 9, shift disablement unit 60A includes a logical sum unit (OR) 254, a third determination unit 250 for determining whether or not the vehicle is in the nearly limited state based on the vehicle speed margin (predicted value), and a fourth determination unit 252 for determining whether or not the vehicle is in the nearly limited state based on the opening degree margin (predicted value).

Third determination unit 250 includes a subtraction unit 260, a change-with-time calculation unit (d/dt) 262, an integration unit 264, an addition unit 266, and a comparison unit 268. Change-with-time calculation unit 262 calculates an amount of change per unit time of the vehicle speed detected by vehicle speed sensor 20 and outputs the calculated amount to integration unit 264. Integration unit 264 integrates the amount of change per unit time of the vehicle speed from change-with-time calculation unit 262 to predict the amount of increase of the vehicle speed. The integration here typically refers to multiplication over the time from the current time to the time at which the predicted vehicle speed is to be calculated. The amount of increase of the vehicle speed which is output from integration unit 264 is added to the current vehicle speed by addition unit 266 and the sum is output as the predicted vehicle speed to subtraction unit 260. Subtraction unit 260 calculates a vehicle speed margin (predicted value) which is a deviation of the predicted vehicle speed with respect to the vehicle speed limit which is set by the driver, and the calculated margin is output to comparison unit 268. Comparison unit 268 compares the vehicle speed margin (predicted value) with a threshold value #Vth. When the vehicle speed margin (predicted value) is equal to or larger than threshold value #Vth, the output to logical sum unit 254 is activated.

In contrast, fourth determination unit 252 includes a limitation characteristic storage unit 270, a subtraction unit 272 and a comparison unit 274. Limitation characteristic storage unit 270 is basically identical to limitation characteristic storage unit 32 shown in Fig. 2, and outputs a vehicle speed margin (predicted value) calculated by third determination unit 250, namely a predicted throttle opening degree limit corresponding to the deviation between the current vehicle speed limit and the predicted vehicle speed. The predicted throttle opening degree limit corresponds to the throttle opening degree limit at the time for which the prediction should be made by third determination unit 250. Further, an opening degree margin (predicted value) which is a deviation of the accelerator-pedal-based throttle opening degree with respect to the predicted throttle opening degree limit which is output from limitation characteristic storage unit 270 is compared with threshold value #Tth by comparison unit 274. When the opening degree margin (predicted value) is equal to or larger than threshold value #Tth, the output to logical sum unit 254 is activated. Thus, based on the deviation of the current accelerator-pedal-based throttle opening degree with respect to the future throttle opening degree limit, it is determined whether or not vehicle 100 is traveling in the nearly limited state.

Regarding the control structure shown in Fig. 9, threshold values #Vth and #Tth used for determining whether or not the vehicle is in the nearly limited state may be set to values different from threshold values Vth and Tth respectively as shown in Fig. 7 as described above or set to identical values thereto.

Logical sum unit 254 is a part for providing respective outputs from third determination unit 250 and fourth determination unit 252 altogether as the disablement command, and activates the disablement command when any of third determination unit 250 and fourth determination unit 252 determines that the vehicle is in the nearly limited state.

Regarding other features of the control structure, they are similar to those of the above-described embodiment of the present invention, and the detailed description thereof will not be repeated.

The control operation with the above-described control structure is summarized in the form of the following process flow.

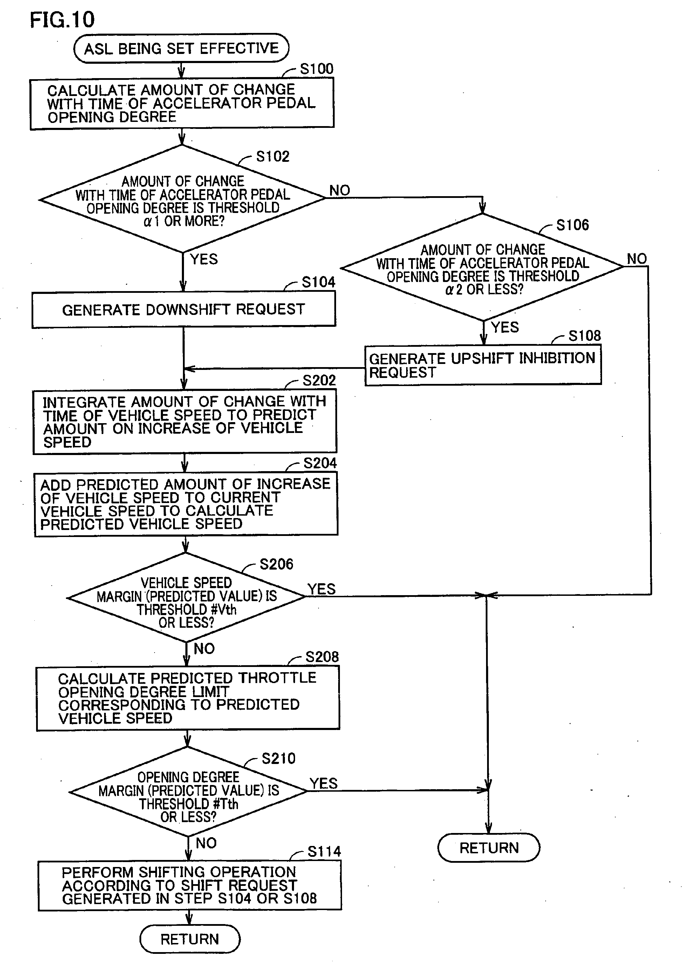

Fig. 10 is a flowchart showing a process procedure relevant to a gear changing operation while the ASL is being set effective, according to the modification of the embodiment of the present invention. Here, the process procedure shown in Fig. 10 is typically performed by control device 2 as a subroutine program. Steps similar to those in Fig. 8 are denoted by the same step numbers.

Referring to Fig. 10, control device 2 obtains the accelerator pedal opening degree from accelerator pedal 22 and calculates an amount of change with time of the accelerator pedal opening degree (step S 100). Control device 2 determines whether or not the calculated amount of change with time of the accelerator pedal opening degree is equal to or larger than threshold value α1 (step S 102). When the amount of change with time of the accelerator pedal opening degree is equal to or larger than threshold value α1 (YES in step S102), control device 2 generates the downshift request (step S104).

In contrast, when the amount of change with time of the accelerator pedal opening degree is not equal to or larger than threshold value α1 (NO in step S 102), control device 2 further determines whether or not the amount of change with time of the accelerator pedal opening degree is equal to or smaller than threshold value α2 (step S106). When the amount of change with time of the accelerator pedal opening degree is equal to or smaller than threshold value α2 (YES in step S106), control device 2 generates the upshift inhibition request (step S 108). When the amount of change with time of the accelerator pedal opening degree is not equal to or smaller than threshold value α2 (NO in step S 106), control device 2 does not perform the subsequent steps and returns to the initial step.

When the downshift request is generated (step S104) or the upshift inhibition request is generated (step S108), control device 2 integrates the amount of change with time of the vehicle speed of vehicle 100 to predict an amount of increase of the vehicle speed (step S202). Control device 2 adds the predicted amount of increase of the vehicle speed to the current vehicle speed to calculate a predicted vehicle speed (step S204). Further, control device 2 determines whether or not the vehicle speed margin (predicted value) which is a deviation of the predicted vehicle speed with respect to a vehicle speed limit which is set by the driver is equal to or smaller than threshold value #Vth (step S206). Specifically, based on the relative relation between the predicted vehicle speed and the vehicle speed limit, whether or not the vehicle is in the nearly limited state is determined. When the vehicle speed margin (predicted value) is equal to or smaller than threshold value #Vth (YES in step S206), control device 2 determines that vehicle 100 is traveling in the nearly limited state, and control device 2 does not perform the subsequent steps and disables the shifting operation according to the shift request generated in step S104 or step S108 described above. Then, control device 2 returns to the initial step.

In contrast, when the predicted vehicle speed margin is not equal to or smaller than threshold value #Vth (NO in step S206), control device 2 calculates a predicted throttle opening degree limit corresponding to the predicted vehicle speed calculated in step S204 (step S208). Control device 2 then determines whether or not the opening degree margin (predicted value) which is a deviation of the accelerator-pedal-based throttle opening degree with respect to the calculated predicted throttle opening degree limit is equal to or smaller than threshold value #Tth (step S210). When the predicted opening degree margin is equal to or smaller than threshold value #Tth (Yes in step S210), control device 2 determines that vehicle 100 is traveling in the nearly limited state. Control device 2 does not perform the subsequent steps and disables the shifting operation according to the shift request generated in above-described step S 104 or step S108. Then, control device 2 returns to the initial step.

In contrast, when the vehicle speed margin (predicted value) is not equal to or smaller than threshold value #Vth (NO in step S210), control device 2 determines that the traveling state of vehicle 100 is not the nearly limited state, and performs the shifting operation according to the shift request generated in the above-described step S 104 or step S108 (step S 114). After the shifting operation is performed, control device 2 returns to the initial step.

Although Fig. 7 shows the structure using first determination unit 200 and second determination unit 252 to determine whether or not the vehicle is in the nearly limited state and Fig. 9 shows the structure using third determination unit 250 and fourth determination unit 252 to determine whether or not the vehicle is in the nearly limited state, the first to fourth determination units may be arbitrarily combined to provide a control structure for determining whether or not the vehicle is in "nearly limited state." Specifically, respective outputs from the first to fourth determination units may be combined using a common logical sum unit to output a disablement signal.

In accordance with the present invention, the shifting operation (downshifting and/or inhibition of upshifting) is disabled while the ASL is being set effective and the vehicle is traveling in the "nearly limited state" in which downshifting and upshifting may be successively performed, and a normal shifting operation is provided otherwise.

In this way, the successively performed downshifting and upshifting in a short period of time can be suppressed to avoid giving the busy impression to the driver. In the traveling state where the downshifting can be performed, the shifting operation is allowed to implement a vehicle behavior substantially equivalent to that when the ASL is not being set effective. In this way, the ASL operation can be performed without giving the odd impression to the driver.

Although the present invention has been described and illustrated in detail, it is clearly understood that the same is by way of illustration and example only and is not to be taken by way of limitation, the scope of the present invention being interpreted by the terms of the appended claims.

A shifting operation is disabled only in the case where a vehicle is in "nearly limited state" which is a state where downshifting and upshifting may be successively performed while the ASL is being set effective. A first determination unit activates an output to a logical sum unit when a vehicle speed margin which is a deviation of the vehicle speed with respect to a vehicle speed limit calculated by a subtraction unit is not more than a threshold value Vth. In contrast, a second determination unit activates an output to the logical sum unit when an opening degree margin which is a deviation of an accelerator-pedal-based throttle opening degree with respect to a throttle opening degree limit calculated by a subtraction unit is not more than a threshold value Tth. When any of the first and second determination units determines that the vehicle is in the nearly limited state, a disablement command is activated.

## Claims

1. A control device (2) mounted on a vehicle (100) for keeping a vehicle speed not higher than a vehicle speed limit that is set by a driver,
said vehicle (100) including:
a driving force source (4) for driving a wheel (12); and
a transmission (8) disposed in a motive power transmission path from said driving force source (4) to said wheel (12) for transmitting a driving force through one gear position selected from a plurality of gear positions,
said driving force source (4) being configured to change a magnitude of the driving force provided to said wheel (12) in response to an output request from said control device (2), and
said control device (2) comprising:
vehicle speed detecting means (20) for detecting said vehicle speed;
operation amount obtaining means (22) for obtaining an amount of operation of an accelerator by the driver;
output request generating means (30, 32, 34) for limiting a driver request value determined according to said amount of operation of the accelerator such that the driver request value does not exceed a driver request value limit determined according to a deviation between said vehicle speed limit and said vehicle speed, and generating said output request based on the limited driver request value;
shifting means (50) for performing downshifting and/or inhibition of upshifting for a gear position being selected of said transmission (8) based on a change of said amount of operation of the accelerator with respect to time; and
disabling means (60, 60A, 42) for disabling shifting operation by said shifting means (50) when said vehicle (100) is traveling in a nearly limited state, **characterized in that**
said shifting means (50) performs said downshifting when an amount of increase with respect to time of said amount of operation of the accelerator is not less than a predetermined positive value, and performs said inhibition of upshifting when an amount of decrease with respect to time of said amount of operation of the accelerator is not more than a predetermined negative value.

2. The control device according to claim 1, wherein
said disabling means (60, 42) determines whether or not the vehicle is in said nearly limited state, based on a relative relation between said vehicle speed and said vehicle speed limit.

3. The control device according to claim 2, wherein
said disabling means (60, 42) determines that the vehicle is in said nearly limited state, when an amount of margin of said vehicle speed with respect to said vehicle speed limit is not more than a predetermined value.

4. The control device according to claim 2 or 3, wherein
said disabling means (60A, 42) calculates a predicted vehicle speed based on a change with respect to time of said vehicle speed, and determines that the vehicle is in said nearly limited state when an amount of margin of said predicted vehicle speed with respect to said vehicle speed limit is not more than a predetermined value.

5. The control device according to any of claims 1 to 4, wherein
said disabling means (60, 42) determines whether or not the vehicle is in said nearly limited state, based on a relative relation between said driver request value and said driver request value limit.

6. The control device according to claim 5, wherein
said disabling means (60, 42) determines that the vehicle is in said nearly limited state when an amount of margin of said driver request value with respect to said driver request value limit is not more than a predetermined value.

7. The control device according to claim 5 or 6, wherein
said disabling means (60A, 42) calculates a predicted vehicle speed based on a change with respect to time of said vehicle speed, determines a predicted value of said driver request value limit according to said predicted vehicle speed, and determines that the vehicle is in said nearly limited state when an amount of margin of said driver request value with respect to said predicted value of said driver request value limit is not more than a predetermined value.

## Patentansprüche

1. Steuervorrichtung (2), die an einem Fahrzeug (100) befestigt ist, zum Beibehalten einer Fahrzeuggeschwindigkeit nicht höher als ein Fahrzeuggeschwindigkeitsgrenzwert, der durch einen Fahrer eingestellt ist,
wobei das Fahrzeug (100) Folgendes aufweist:
eine Antriebskraftquelle (4) zum Antreiben eines Rads (12) und
ein Getriebe (8), das in einem Antriebskraftübertragungsweg von der Antriebskraftquelle (4) zu dem Rad (12) zum Übertragen einer Antriebskraft durch eine Getriebeposition angeordnet ist, die aus einer Vielzahl von Getriebepositionen ausgewählt ist,
wobei die Antriebskraftquelle (4) gestaltet ist, um eine Magnitude der Antriebskraft zu ändern, die an dem Rad (12) vorgesehen ist, in Erwiderung auf eine Ausgabeanforderung von der Steuervorrichtung (2), und
wobei die Steuervorrichtung (2) Folgendes aufweist:
eine Fahrzeuggeschwindigkeitserfassungseinrichtung (20) zum Erfassen der Fahrzeuggeschwindigkeit;
eine Betätigungsbetragserlangungseinrichtung (22) zum Erlangen eines Betrags einer Betätigung einer Beschleunigungseinrichtung durch den Fahrer;
eine Ausgabeanforderungserzeugungseinrichtung (30, 32, 34) zum Begrenzen eines Fahreranforderungswerts, der gemäß dem Betrag einer Betätigung der Beschleunigungseinrichtung bestimmt ist, so dass der Fahreranforderungswert einen Fahreranforderungswertgrenzwert, der gemäß einer Abweichung zwischen dem Fahrzeuggeschwindigkeitsgrenzwert und der Fahrzeuggeschwindigkeit bestimmt ist, nicht übersteigt, und zum Erzeugen der Ausgabeanforderung basierend auf dem begrenzten Fahreranforderungswert;
eine Schalteinrichtung (50) zum Durchführen eines Herunterschaltens und/oder Verhindern eines Heraufschaltens für eine Getriebeposition, die durch das Getriebe (8) basierend auf einer Änderung des Betrags einer Betätigung der Beschleunigungseinrichtung hinsichtlich der Zeit ausgewählt ist; und
eine Deaktivierungseinrichtung (60, 60A, 42) zum Deaktivieren einer Schaltbetätigung durch die Schalteinrichtung (50), wenn das Fahrzeug (100) in einem nahezu begrenzten Zustand fährt,
**dadurch gekennzeichnet, dass**
die Schalteinrichtung (50) das Herunterschalten durchführt, wenn ein Erhöhungsbetrag des Betrags einer Betätigung der Beschleunigungseinrichtung hinsichtlich der Zeit nicht geringer als ein vorbestimmter positiver Wert ist, und die Verhinderung eines Heraufschaltens durchführt, wenn ein Verringerungsbetrag des Betrags einer Betätigung der Beschleunigungseinrichtung hinsichtlich der Zeit nicht mehr als ein vorbestimmter negativer Wert ist.

2. Steuervorrichtung nach Anspruch 1, wobei die Deaktivierungseinrichtung (60, 42) bestimmt, ob das Fahrzeug in dem nahezu begrenzten Zustand ist oder nicht, basierend auf einem relativen Verhältnis zwischen der Fahrzeuggeschwindigkeit und dem Fahrzeuggeschwindigkeitsgrenzwert.

3. Steuervorrichtung nach Anspruch 2, wobei die Deaktivierungseinrichtung (60, 42) bestimmt, dass das Fahrzeug in dem nahezu begrenzten Zustand ist, wenn ein Betrag einer Spanne der Fahrzeuggeschwindigkeit hinsichtlich des Fahrzeuggeschwindigkeitsgrenzwerts nicht mehr als ein vorbestimmter Wert ist.

4. Steuervorrichtung nach Anspruch 2 oder 3, wobei die Deaktivierungseinrichtung (60A, 42) eine prognostizierte Fahrzeuggeschwindigkeit basierend auf einer Änderung der Fahrzeuggeschwindigkeit hinsichtlich der Zeit berechnet und bestimmt, dass das Fahrzeug in einem nahezu begrenzten Zustand ist, wenn ein Betrag einer Spanne der prognostizierten Fahrzeuggeschwindigkeit hinsichtlicht des Fahrzeuggeschwindigkeitsgrenzwerts nicht mehr als ein vorbestimmter Wert ist.

5. Steuervorrichtung nach einem der Ansprüche 1 bis 4, wobei die Deaktivierungseinrichtung (60, 42) bestimmt, ob das Fahrzeug in dem nahezu begrenzten Zustand ist oder nicht, basierend auf einem relativen Verhältnis zwischen dem Fahreranforderungswert und dem Fahreranforderungswertgrenzwert.

6. Steuervorrichtung nach Anspruch 5, wobei die Deaktivierungseinrichtung (60, 42) bestimmt, dass das Fahrzeug in dem nahezu begrenzten Zustand ist, wenn ein Betrag einer Spanne des Fahreranforderungswerts hinsichtlich des Fahreranforderungswertgrenzwerts nicht mehr als ein vorbestimmter Wert ist.

7. Steuervorrichtung nach Anspruch 5 oder 6, wobei die Deaktivierungseinrichtung (60A, 42) eine prognostizierte Fahrzeuggeschwindigkeit basierend auf einer Änderung der Fahrzeuggeschwindigkeit hinsichtlich der Zeit berechnet, einen prognostizierten Wert des Fahreranforderungswertgrenzwerts gemäß der prognostizierten Fahrzeuggeschwindigkeit bestimmt und bestimmt, dass das Fahrzeug in dem nahezu begrenzten Zustand ist, wenn ein Betrag einer Spanne des Fahreranforderungswerts hinsichtlich des prognostizierten Werts des Fahreranforderungswertgrenzwerts nicht mehr als ein vorbestimmter Wert ist.

## Revendications

1. Dispositif (2) de commande monté sur un véhicule (100) pour qu'une vitesse du véhicule ne dépasse pas une limite de vitesse du véhicule qui est définie par un conducteur,
ledit véhicule (100) comportant :
une source (4) de force d'entraînement destinée à entraîner une roue (12) ; et
une transmission (8) disposée dans un chemin de transmission de force motrice de ladite source (4) de force d'entraînement à ladite roue (12) pour transmettre une force d'entraînement à travers une position de vitesse choisie parmi une pluralité de positions de vitesse,
ladite source (4) de force d'entraînement étant configurée pour changer une grandeur de la force d'entraînement fournie à ladite roue (12) en réponse à une demande de sortie dudit dispositif (2) de commande, et
ledit dispositif (2) de commande comprenant :
un moyen (20) de détection de vitesse du véhicule destiné à détecter ladite vitesse du véhicule ;
un moyen (22) d'obtention de quantité d'actionnement permettant d'obtenir une quantité d'actionnement d'une pédale d'accélérateur par le conducteur ;
un moyen (30, 32, 34) de génération de demande de sortie destiné à limiter une valeur de demande du conducteur déterminée selon ladite quantité d'actionnement de la pédale d'accélérateur de sorte que la valeur de demande du conducteur ne dépasse pas une limite de valeur de demande du conducteur déterminée selon un écart entre ladite limite de vitesse du véhicule et ladite vitesse du véhicule, et à générer ladite demande de sortie sur la base de la valeur limite de demande du conducteur ;
un moyen (50) de changement de vitesse destiné à réaliser un rétrogradage des vitesses et/ou une inhibition du passage à la vitesse supérieure pour une position de vitesse qui est sélectionnée de ladite transmission (8) sur la base d'un changement de ladite quantité d'actionnement de la pédale d'accélérateur par rapport au temps ; et
un moyen (60, 60A, 42) de désactivation destiné à désactiver l'opération de changement de vitesse par ledit moyen (50) de changement de vitesse lorsque ledit véhicule (100) se déplace dans un état presque limité,
**caractérisé en ce que**
ledit moyen (50) de changement de vitesse effectue ledit rétrogradage des vitesses lorsqu'une grandeur d'augmentation par rapport au temps de ladite quantité d'actionnement de la pédale d'accélérateur n'est pas inférieure à une valeur positive prédéterminée, et effectue ladite inhibition du passage à la vitesse supérieure lorsqu'une grandeur de diminution par rapport au temps de ladite quantité d'actionnement de la pédale d'accélérateur ne dépasse pas une valeur négative prédéterminée.

2. Dispositif de commande selon la revendication 1, dans lequel
ledit moyen (60, 42) de désactivation détermine si le véhicule est dans ledit état presque limité ou non, sur la base d'une relation relative entre ladite vitesse du véhicule et ladite limite de vitesse du véhicule.

3. Dispositif de commande selon la revendication 2, dans lequel
ledit moyen (60, 42) de désactivation détermine que le véhicule est dans ledit état presque limité, lorsqu'une grandeur de marge de ladite vitesse du véhicule par rapport à ladite limite de vitesse du véhicule ne dépasse pas une valeur prédéterminée.

4. Dispositif de commande selon la revendication 2 ou 3, dans lequel
ledit moyen (60A, 42) de désactivation calcule une vitesse prévue du véhicule sur la base d'un changement par rapport au temps de ladite vitesse du véhicule, et détermine que le véhicule est dans ledit état presque limité lorsqu'une grandeur de marge de ladite vitesse prévue du véhicule par rapport à ladite limite de vitesse du véhicule ne dépasse pas une valeur prédéterminée.

5. Dispositif de commande selon l'une des revendications 1 à 4, dans lequel
ledit moyen (60, 42) de désactivation détermine si le véhicule est dans ledit état presque limité ou non, sur la base d'une relation relative entre ladite valeur de demande du conducteur et ladite limite de valeur de demande du conducteur.

6. Dispositif de commande selon la revendication 5, dans lequel
ledit moyen (60, 42) de désactivation détermine que le véhicule est dans ledit état presque limité lorsqu'une grandeur de marge de ladite valeur de demande du conducteur par rapport à ladite limite de valeur de demande du conducteur ne dépasse pas une valeur prédéterminée.

7. Dispositif de commande selon la revendication 5 ou 6, dans lequel
ledit moyen (60A, 42) de désactivation calcule une vitesse prévue du véhicule sur la base d'un changement par rapport au temps de ladite vitesse du véhicule, détermine une valeur prévue de ladite limite de valeur de demande du conducteur selon ladite vitesse prévue du véhicule, et détermine que le véhicule est dans ledit état presque limité lorsqu'une quantité de marge de ladite valeur de demande du conducteur par rapport à ladite valeur prévue de ladite limite de valeur de demande du conducteur ne dépasse pas une valeur prédéterminée.
